# EUROPEAN PATENT APPLICATION

(11) **EP 4 056 042 A1**
(43) Date of publication of application: **14.09.2022**
(21) Application number: 21161166.0
(22) Date of filing: 08.03.2021
(51) Int. Cl.: A23C 19/068, A23C 19/10, A23C 19/11, A23C 19/06, A23C 19/086

(54) **ANTIFUNGAL IN PASTA FILATA**

(71) Applicant: DSM IP Assets B.V., 6411 TE Heerlen (NL)
(72) Inventor: FARAGNER, John Mark, 6100 AA ECHT (NL); LARA AGUILAR, Sofia, 6100AA ECHT (NL); VOGEL, Kent Edward, 6100 AA ECHT (NL)
(74) Representative: DSM Intellectual Property

(57) **Abstract**

The present invention relates to a method to produce pasta filata cheese wherein curd is heated in an aqueous solution in the presence of an antifungal agent and to a pasta filata cheese with a homogeneous distribution of antifungal agent.

## Description

### Field of the invention

The present invention relates to a method to produce pasta filata cheese wherein curd is heated in an aqueous solution in the presence of an antifungal agent and to a pasta filata cheese with a homogeneous distribution of antifungal agent.

### Background of the invention

Fungal spoilage of food stuffs can lead to major economic losses and waste of food. The cheese industry is no exception to this and the application of antifungals on the surface of cheeses is therefore well-known. In general, this approach provides sufficient protection of the cheese against molds as the antifungal is present on the sensitive outside of the cheese. Usually there is limited or even no diffusion of the antifungal to the inside of the cheese which is not a problem if the inside is not in direct contact with the environment. However, when cheeses are further processed, for example by slicing or grating as described in WO 2005/120260 or US 2006/266175, major parts of the cheese that do not contain the antifungal or contain insufficient amounts of antifungal become exposed and are susceptible to fungal spoilage. This problem can be addressed by treating sliced or grated cheese with antifungal after the grating or slicing procedure, for example by spraying a solution or suspension of the antifungal as described in WO 2015/121421 or by combining the antifungal with the application of anti-caking agent as disclosed in EP 1157618. In general, a drawback of these approaches is that distribution of the natamycin over the grated cheese particles is not homogeneous (irregular), wide-spread and is difficult to tune. As these approaches are laborious and often result in significant losses of unused antifungal, alternative antifungal application techniques for sliced or grated cheese have been reported. For example, US 2009/0123620 describes the application of a powdered natamycin layer on a cheese log prior to slicing of the log. During slicing the natamycin is spread by the cutting blade over the faces of the cheese slices. A drawback is that relatively high amounts of natamycin on the surface are required and another drawback remains that distribution of the natamycin over the faces of the slices is not homogeneous (irregular).

WO 2016/034549 describes the application of natamycin already in the beginning of the cheese-making process, namely by adding it to the milk before curd formation, which results in a homogeneous (regular) distribution of natamycin throughout the cheeses. A drawback of this approach is that antifungal remains in the whey which can therefore not be used for manufacturing further whey products.

### Legend to the Figures

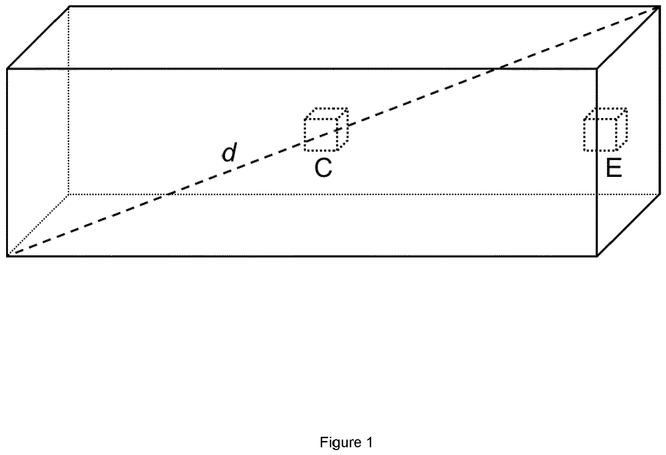

Figure 1 depicts a pasta filata cheese wherein d represents the longest straight line that can be drawn between two points located on the surface of the cheese. C represents the center of the pasta filata cheese and E represents the edge of the pasta filata cheese.

### Detailed description

The problem formulated above, amongst other problems, is solved by the process of the present invention which results in pasta filata cheese which has a homogeneous (regular) distribution of antifungal throughout the cheese.

In the context of the present invention, the term "pasta filata" refers to a technique in the manufacture of cheeses also known as stretched-curd, pulled-curd, and plastic-curd cheeses whereby curd undergoes a plasticizing and kneading treatment in hot water. Following curd formation (usually from milk from cows or water buffalo) curds are cut into pieces and separated from the whey and allowed to rest after which the curds are steeped in a bath of hot whey or water until floating. The curd is usually mixed and/or kneaded and/or stretched while submerged in hot whey or hot water or a hot aqueous solution. After removal of the liquid the curd is mixed and kneaded until the required soft, elastic, stringy texture is obtained. The mass of curd is divided (often by pulling out a thick strand and chopping it) and shaped into individual cheeses. For some cheeses further processing is needed, for example ageing, brining, or smoking or a combination of these steps.

In the context of the present invention, the term "stretching" refers to mechanical action on curd. The mechanical action may be carried out manually or using mechanical mixers or stretchers or the like. Stretching may be carried while curd is submerged in an aqueous solution such as water and/or whey but may also be carried out outside such aqueous solution. Stretching can comprise actions such as kneading, mixing and/or pulling.

In the context of the present invention, the term "pasta filata cheese" refers to cheeses that are prepared following the above pasta filata process. Pasta filata cheeses have a fibrous structure and encompass cheeses like Akkawi, Bocconcini, braided cheese, Cacio figurato, Caciocavallo, Galbanino, Halloumi, Kashkaval, Mozzarella, Mozzarella di bufala, Oaxaca cheese, Oscypek, Oštiepok, Pallone di Gravina, Parenica, Provolone, Ragusano cheese, Scamorza, Stracciata, Stracciatella di bufala, and so-called string cheeses like Chechil, Korbáčik and Sulguni. The term "string cheese" refers to several different types of cheese where the manufacturing process aligns the proteins in the cheese, which makes it stringy.

In the context of the present invention, the term "ppm" refers to parts per million and is expressed in weight. A concentration of 1 ppm of an antifungal in water is, for example, 0.001 g of natamycin in an aqueous solution or suspension with a total weight of 1 kg.

In the context of the present invention, the term "concentration of antifungal in the cheese" refers to the average concentration of the cheese or cheese particle in question, unless the term is further specified to a certain part of the cheese or cheese particle, like e.g. the center or the edge.

In the context of the present invention, the term "edge" in relation to pasta filata cheese refers to any part of the cheese that is removed not further than 2 cm from the surface of the cheese.

In the context of the present invention, the term "center" in relation to pasta filata cheese is defined based on the length d of the longest straight line that can be drawn between two points located on the surface of the cheese. The center of a cheese is the center of a sphere or cube located at 0.5**d* from either of the two points mentioned before, which sphere has a radius r of 0.05**d* or which cube has faces of 0.025**d* x 0.025**d*. Any part of the sphere or cube which falls within the edge as defined above is excluded from the definition "center". An example of a pasta filata cheese with indications of center and edge is given in Figure 1.

In the context of the present invention, the term "shredded" in relation to pasta filata cheese refers to pasta filata cheese that is typically first comminuted to form relatively small pieces of cheese. The pieces can have a variety of different forms including cubes, diced form, shredded form, grated form, sliced form, powdered form, to name just a few. All these forms are meant to be included under the term "shredded cheese" as used herein. One skilled in the art can readily adapt a grinding or shredding apparatus to yield these forms.

In a first aspect, the invention provides a method for the production of pasta filata cheese comprising heating curd in an aqueous solution at a temperature of 50-98°C characterized in that said aqueous solution comprises 10-5000 ppm of an antifungal agent.

Production of curd is well-known to the skilled person. Curd is obtained by coagulating milk. The coagulation can be caused by adding rennet or any edible acidic substance such as lemon juice or vinegar, and then allowing it to coagulate. The increased acidity causes the milk proteins (casein) to tangle into solid masses, or curds. Milk that has been left to sour (raw milk alone or pasteurized milk with added lactic acid bacteria) will also naturally produce curds, and sour milk cheeses are produced this way. After curds are pressed and drained, the remaining liquid, which contains mostly whey proteins, is the whey. The milk may be cow's milk, but in pasta filata milk from (water) buffalo, goat milk or sheep milk is also often used.

In the pasta filata process the curd is heat-treated in an aqueous solution. In an embodiment the aqueous solution is water, in another embodiment the aqueous solution may be whey. In an embodiment the temperature at which heat-treatment takes place is 50-98°C, or 51-95°C, or 52-90°C, or 53-85°C, or 54-80°C, or 55-75°C or at 65±10°C.

In an embodiment, the method further comprises stretching of said curd. Stretching has the advantage that the typical pasta filata cheese structure is achieved and is thought to result from alignment of the protein structure into strands. Stretching may be carried out for up to 6 hours. In an embodiment stretching is carried out for 1-200 min, or for 10-100 min, or for 15-50 min. In another embodiment the method comprises kneading. In an embodiment kneading is carried out for 2-200 min, or for 10-100 min, or for 15-50 min.

In an embodiment, the method further comprises treating the curd in a brine bath. Preferably such treatment is carried out following kneading and/or stretching.

The method of the present invention provides for the presence of an antifungal agent in the aqueous solution in a concentration of 10-5000 ppm. In an embodiment the concentration of antifungal agent in the aqueous solution is 75-2500 ppm, or 100-1500 ppm or 150-1000 ppm or 200-750 ppm or 250-500 ppm. The skilled person will appreciate that the most suitable concentration is related to the required concentration of the antifungal in the final pasta filata cheese. In another embodiment the aqueous solution may comprise further ingredients such as coloring agents, flavoring agents, or agents influencing taste and/or smell. In an embodiment the aqueous solution comprising the antifungal agent is collected after the pasta filata process and used in a subsequent pasta filata process, optionally with the addition of further antifungal agent to the aqueous solution. In another embodiment the aqueous solution comprising the antifungal agent is used in a continuous pasta filata process, optionally with the addition of further antifungal agents to the aqueous solution.

It was found that the distribution of antifungal agent in various sections of the pasta filata cheese produced according to the present invention is homogeneous. In the context of the present invention, when comparing the amount of antifungal in the center of the pasta filata cheese with that in the edge of the pasta filata cheese the ratio of antifungal in the center of the cheese over antifungal in the edge of the cheese is 0.75-1.15, advantageously 0.80-1.10, more advantageously 0.95±0.15. in the context of the present invention, a homogeneous (regular) distribution of the antifungal in the center of the pasta filata is defined by the ratio of antifungal in the center of the cheese over antifungal in the edge of the cheese being 0.75-1.15. A homogeneous distribution of antifungal is a surprisingly positive result of the invention, notably for antifungals that are known to be temperature sensitive in cheese applications, such as e.g. natamycin.

In an embodiment the antifungal is a polyene antifungal. The polyene antifungal may be natamycin, lucensomycin, nystatin, or amphotericin. In an embodiment the polyene antifungal is natamycin. Natamycin has been used for more than 50 years to prevent outgrowth of fungi on, amongst others, cheese. Natamycin has a MIC (Minimal Inhibition Concentration) of less than 20 ppm for most food born fungi while its solubility in water is from 30 to 50 ppm. Natamycin can easily be applied to prevent spoilage by fungi in food products. However, the low solubility of natamycin has in most instances limited its use to the surface treatment of cheese.

In another embodiment the antifungal is nisin. In yet another embodiment a combination of more than one antifungal, such as natamycin and nisin, may be employed.

In an embodiment the method further comprises in a follow up step drying of the pasta filata cheese followed by grating and/or shredding and/or slicing. Methods for drying pasta filata cheese and methods for producing shredded cheese are known to the person skilled in the art. As a non-limiting example the procedure as outlined in US 2006/266175 may be followed, wherein bulk cheese blocks are first reduced into smaller cheese portions that are transferred to an in-line conveyor which transports the cheese to one or more cutting system that comprise one or more knives.

In an embodiment the shredded pasta filata cheese may be further processed for example by applying an anti-cake agent such as cellulose, or starch from potato, rice, wheat, tapioca or corn, or polysaccharides, or silicates, or flours, or sulphates, or minerals, or phosphates, or clays, or fibers, or combinations thereof. The resulting cheese crumbles may be weighed in small bulks with the various bulks combining to provide for predetermined quantity weights or weight ranges for packaging into individual packages for retail sale. The packages may be made using the methods and apparatus disclosed, for example, in US 6,357,914, US 6,688,079 or US 6,688,080.

In a second aspect, the invention provides pasta filata cheese comprising an antifungal wherein the ratio of the average amount of antifungal in the center of the cheese over the average amount of antifungal in the edge of the cheese is 0.95±0.15. A pasta filata cheese comprising an antifungal wherein the ratio of antifungal in the center of the cheese over antifungal in the edge of the cheese is close to unity is unprecedented. Such a ratio has the advantage that upon grating, shredding, or slicing of the pasta filata cheese particles or slices are obtained that comprise antifungal in a homogeneously distributed fashion. Pasta filata particles, slices or shreds that have surfaces or faces that do not contain sufficient antifungal, or no antifungal at all, are avoided. The latter brings with it that fungal contamination of such particles or slices is avoided, already immediately after their formation. In addition, subsequent treatment with an antifungal is not necessary, removing a laborious step from the shredded or sliced pasta filata cheese manufacturing.

The present invention also provides pasta filata cheese particles for example obtained as described in US 2006/266175 or by shredding in an industrial shredder or household food processor equipped with a shredding blade. In an embodiment, after shredding the shredded cheese may be transferred to a stacking sieve (American Society for Testing and Materials (ASTM) specification no. 4, 6, and 10; Retsch Inc., Newtown, PA) and mechanically shaken for 60 s at 278 oscillations and 150±10 taps per minute (Ro-Tap RX-29 sieve shaker; W.S. Tyler, Mentor, OH). The cheese fractions retained by the mesh sieves with 22.26-, 11.22-, and 4.00 mm² openings are classified as long, medium, and small shreds, respectively. Cheese particles passing through the mesh with 4.00 mm² openings are classified as fines. In an embodiment, pasta filata cheese particles are those that pass the 22.26 mm² sieve and are retained by the 4.00 mm² sieve. In practice these are pasta filata cheese particles the average largest diameter of which is 0.5-20 mm, preferably 1-10 mm or 1.2-6 mm 4±3 mm. The largest diameter of a particle may be determined by methods known to the skilled person such as measurement using a microscope. The average largest diameter is determined by averaging a set of at least 20 measurements, for example from 20-50 measurements.

In an embodiment, the concentration of antifungal in the pasta filata cheese is 1-50 ppm as such concentration generally provides sufficient antifungal protection. In another embodiment, the concentration of antifungal in the pasta filata cheese is 2-40 ppm, or 3-30 ppm, or 5-25 ppm.

In an embodiment the antifungal is a polyene antifungal. The polyene antifungal may be natamycin, lucensomycin, nystatin, or amphotericin. In an embodiment the polyene antifungal is natamycin. In another embodiment the antifungal is nisin. In yet another embodiment a combination of more than one antifungal, such as natamycin and nisin, may be employed.

The Invention is further illustrating using the following non limiting examples.

### EXAMPLES

### Materials and methods

Determination of natamycin content of cheese, cheese rinds, grated cheese, sliced cheese, and the like in the below examples was carried out according to International IDF Standard 140A:1992 (corresponding ISO text is ISO 9233).

### Comparative Example 1

### Shredded mozzarella cheese sprayed with natamycin

Commercially available shredded mozzarella, sprayed with natamycin following the shredding process, were analyzed for natamycin content. From three different products with varying natamycin content, referred to as A, B and C, a multitude of particles was analyzed, the result of which is depicted in the below Table.

**Table Distribution of natamycin in grated mozzarella cheese prepared with three different target natamycin contents**

| Sample | Natamycin (ppm) | | | SD | | N |
|---|---|---|---|---|---|---|
| | Average | High | Low | ppm | Compared to average (%) | |
| A | 2.93 | 14.25 | 0 | 2.30 | 79 | 111 |
| B | 4.78 | 7.32 | 0.82 | 3.16 | 66 | 42 |
| C | 7.72 | 13.47 | 3.82 | 2.54 | 33 | 52 |

As can be seen from the above Table, natamycin distribution varies widely across the three samples tested. The observed standard deviation (SD) is 33% of the average natamycin content in the sample with 7.72 ppm natamycin up to even 79% of the average natamycin content in the sample with 2.93 ppm natamycin.

### Example 1

### Application of natamycin during pasta filata process

Low-moisture part-skim (LMPS) mozzarella cheeses were manufactured in two vats in a dairy plant as follows. Milk was standardized by ultrafiltration (13.6% solids) and then pasteurized at 74°C for 19 seconds and cooled to 5°C. Lactic acid was diluted at a rate of 4 parts water to 1 part lactic acid (w/w) and the diluted acid was added to the cold milk to adjust the pH to 6.5. Each vat was filled with 190.5 kg of the milk prepared in the previous steps. The milk temperature was raised to a ripening temperature of 35°C and a direct-vat-set thermophilic culture comprising *Streptococcus thermophilus* only (Delvo^{®}Cheese CP-501, DSM Food Specialties, Waukesha, WI) was added to each vat at 32 g/100 kg of milk. After 30 minutes of ripening time, the coagulant

(Maxiren^{®} XDS, DSM Food Specialties, Seclin, FR) was added to each vat at 7.2 g/100 kg of milk. The coagulum was cut at similar firmness for both vats. The pH at cutting was 6.4. Both coagula were cut with 1.9-cm knives. The temperature of both vats was raised to 42°C during a 30 min period. Each mixture was agitated until the pH reached 5.9; after which agitation was stopped, curd was trenched, and the whey was drained. The resulting cheese mat was cut in slabs and stacked. At pH 5.2, cheeses were milled, sprinkled with cold water at 15.5°C and pre-salted at a level of 0.35% (w/w, based on weight of cheese milk).
The pre-salted curd from both vats was comingled and stretched in a wet cooker (Supreme Filata Mixer, Stainless Steel Fabricating Inc., Columbus, WI) for about 7 min. The curd temperature was about 54°C. Natamycin (Delvo^{®}Cid+, DSM Food Specialties, Seclin, FR) was added to the water tank to achieve an initial concentration of 1685 ppm of natamycin in the water. The temperature of the solution was about 64.5°C during the stretching. After stretching, the hot curd was placed in 2.3 kg blocks, which were kept in cold water for 30 min and then brined (in 25% salt brine) for 120 min at approximately 4°C. The brine-salted cheeses were vacuum-packed in standard clear bags (Cryovac) and stored at 3°C. Samples from the center as well as from the edge of the cheeses were analyzed for natamycin; for the results see the below Table.

**Table Distribution of natamycin in mozzarella cheese prepared with a target natamycin content of 20 ppm: samples taken from the center or the edge of the cheese**

| Sample | Natamycin (ppm) | | | SD | | N |
|---|---|---|---|---|---|---|
| | Average | High | Low | ppm | Compared to average (%) | |
| Cheese center | 19.6 | 25.5 | 15.6 | 2.90 | 15 | 16 |
| Cheese edge | 21.7 | 26.7 | 16.9 | 2.90 | 13 | 16 |

As can be seen from the above Table, the natamycin content is similar when comparing the center of the cheese with the edge which implies that upon grating/shredding the natamycin content will also be similar. In this example the ratio of natamycin in the center of the cheese over natamycin in the edge of the cheese is 0.90. Secondly, natamycin distributions are narrow and similar for cheese samples taken from center or edge: the observed standard deviation (SD) is 13% of the average natamycin content in samples from the edge of the cheese, and 15% of the average natamycin content in samples from the center of the cheese. Additionally, natamycin concentration in the water was monitored overtime, the results of which are in the below Table.

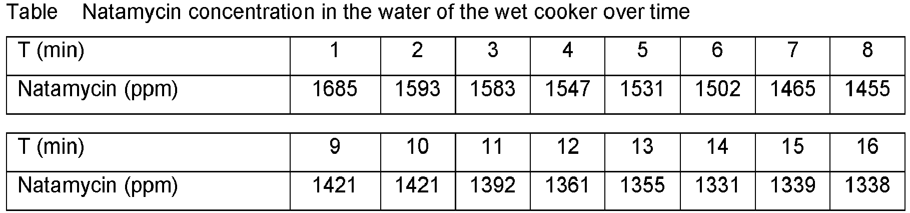

## Claims

1. A method for the production of pasta filata cheese comprising heating curd in an aqueous solution at a temperature of 50-98°C **characterized in that** said aqueous solution comprises 10-5000 ppm of an antifungal agent.

2. Method according to claim 1 wherein said aqueous solution comprises 100-1500 ppm of an antifungal agent.

3. Method according to anyone of the preceding claims wherein said antifungal agent is natamycin.

4. Method according to anyone of the preceding claims wherein said temperature is 55-75°C.

5. Method according to anyone of the preceding claims further comprising stretching of said curd.

6. Method according to claim 5 wherein said stretching is carried out for 1-200 min.

7. Method according to anyone of claims 5-6 followed by drying of said pasta filata cheese followed by grating and/or shredding and/or slicing.

8. Pasta filata cheese comprising an antifungal wherein the ratio of the average amount of antifungal in the center of the cheese over the average amount of antifungal in the edge of the cheese is 0.95±0.15.

9. Pasta filata cheese according to claim 8 in the form of particles with an average largest diameter of 0.5-20 mm.

10. Pasta filata cheese according to anyone of claims 8-9 wherein the antifungal concentration in the cheese is 1-50 ppm.

11. Pasta filata cheese according to anyone of claims 8-10 wherein the antifungal is natamycin.
